# EUROPEAN PATENT APPLICATION

(11) **EP 4 239 541 A1**
(43) Date of publication of application: **06.09.2023**
(21) Application number: 23158835.1
(22) Date of filing: 27.02.2023
(51) Int. Cl.: G06Q 10/02

(54) **SYSTEM AND METHOD FOR NAVIGATION TO MULTIPLE STOPS**

(30) Priority: 01.03.2022 US 202263315156 P
(71) Applicant: AmptUp Inc., Portland, OR 97203 (US)
(72) Inventor: Hagerman, Holly, Portland, 97203 (US)
(74) Representative: Harrison IP Limited

(57) **Abstract**

A system and method for managing performance venues, including with regard to booking live acts for such venues. Live acts, including without limitation musicians, comedians and other live performers, may be matched with an appropriate venue at an appropriate date. Matching may occur with regard to a variety of characteristics, including without limitation the type of act, the type of venue, date and time, type of payment offered and so forth. The present invention also features tour construction for a live act, including assistance with selecting one or more venues and planning travel as part of the tour.

## Description

### FIELD OF THE INVENTION

The present invention, in at least some embodiments, is of a system and method for navigation to multiple stops, including with regard to bringing equipment to multiple venues for live acts.

### BACKGROUND OF THE INVENTION

Performance venues need to book a continuous stream of live acts for live performances. Live acts also need to be booked by performance venues. However, for lesser known acts or venues, or for acts without full time professional marketing and management, such bookings have been time consuming and difficult. Since it is difficult for musicians in particular to make a living currently through selling recorded music, given the challenges of the music industry business model, live performances have become a crucial way for musicians to survive. Therefore, both venues and performers have an interest in a better way to locate each other for booki0ngs and live performances.

### BRIEF SUMMARY OF THE INVENTION

The background art does not provide a solution to the problem of arranging a tour for live acts. Live acts, including without limitation musicians, comedians and other live performers, need be matched with an appropriate venue at an appropriate date when arranging a tour. When live acts are on tour, at the very least they need to bring physical equipment and one or more individuals to multiple stops at different venues. Arranging such a tour is quite difficult, because of the need to include a variety of factors, including but not limited to availability of a suitable venue at a particular date; desire to limit one or more cost factors including but not limited to distance traveled, availability of various transportation means or ability to source local performers and/or equipment; availability of an opening act at that venue that does not require additional travel time or costs; and so forth. Attempting to arrange such a tour computationally relates to the "traveling salesman problem", which is known in the art to be NP-complete (nondeterministic polynomial-time complete). This class of computational problems has solutions that rapidly become difficult and time consuming to find, even with a computer.

The present invention overcomes these difficulties with arranging a tour by providing a system and method for navigation to multiple stops, including with regard to bringing equipment to multiple venues for live acts. The system and method are able to arrange the variety of factors required for a successful tour, including but not limited to availability of a suitable venue at a particular date; desire to limit one or more cost factors including but not limited to distance traveled, availability of various transportation means or ability to source local performers and/or equipment; availability of an opening act at that venue that does not require additional travel time or costs; and so forth.

Matching may occur with regard to a variety of characteristics, including without limitation the type of act, the type of venue, date and time, type of payment offered and so forth. The present invention also features tour construction for a live act, including assistance with selecting one or more venues and planning travel as part of the tour.

There is provided a system for navigating a live act through a plurality of venues at a plurality of dates to create a tour, the system comprising a live act computational device, comprising a memory for storing a plurality of instructions and a processor for executing said instructions; a server, said server comprising a memory for storing a plurality of instructions and a processor for executing said instructions; and a computer network for communicating between said live act computational device and said server; wherein said live act computational device receives an input plurality of tour parameters, comprising a date range for the tour, a plurality of venue locations and travel requirements, and sends said tour parameters to said server; and wherein said server determines said tour at least according to said tour parameters to create a map to navigate the live act through the plurality of venues at the plurality of dates.

Optionally, the processor of said server further executes instructions to create a tour pitch according to said tour parameters, and wherein said server further sends said tour pitch to said venue computational device. Also optionally, the tour pitch is adjusted through said live act computational device. Also optionally, said tour parameters further comprise at least one venue parameter, selected from the group consisting of a geographical region, a geographical location, a type of venue, a specific venue, a payment policy and a successful venue. Optionally, said successful venue is determined to be successful according to at least one success criteria, wherein said success criteria comprises one or more of financially successful for ticket sales, financially successful for merchandise sales, financially successful for a cut of food and/or beverage sales, financially successful for payment to a live act, or a combination thereof; optionally wherein said success criteria is further determined according to success for a previous live act of the same or similar type as the live act.

Optionally said date range comprises a desired start date and a desired end date; wherein said date range further comprises one or more specific dates at specific geographical locations; optionally wherein said one or more specific dates at specific geographical locations is determined according to a specific city; and/or optionally wherein said one or more specific dates at specific geographical locations is determined according to a specific venue. Optionally said travel requirements relate to a desired distance for travel, a desired time for travel, a desired travel mode or a combination thereof. Optionally said tour parameters further comprise determining an availability of a local performer, locally available equipment or a combination thereof at each venue; and adjusting said tour according to said local availability. Optionally the system further comprises a venue computational device for each venue; wherein said tour parameters further comprise providing one or more anchor tour locations, wherein each of said anchor tour locations comprises a specific geographic location; wherein said anchor tour locations are included in said tour; and wherein one or more venue computational devices at each anchor tour location is notified of said live act by said server.

Optionally said tour parameters further comprise providing one or more anchor tour dates for said one or more anchor tour locations; wherein said processor executes said instructions to determine said navigation according to said anchor tour dates and said anchor tour locations. Optionally the system further comprises a venue computational device for each venue; wherein said server notifies each venue computational device according to said navigation and said tour; wherein each venue computational device responds to said notification with acceptance or rejection of said live act, optionally according to an auction for bidding on said live act by said venue through said venue computational device. Optionally said processor at said server executes a plurality of instructions to operate an AI engine, wherein said AI engine generates said tour according to said tour parameters. Optionally said processor at said server executes a plurality of instructions to operate an AI engine, wherein said AI engine generates a suggested payment policy request and transmits said request to said live act computational device; wherein said request is included in said tour if an acceptance input is input to said live act computational device. Optionally said AI engine comprises a CNN (convolutional neural network) model, trained according to data regarding previous performances at said live venues, distances between venues, and time required for traveling.

Implementation of the method and system of the present invention involves performing or completing certain selected tasks or steps manually, automatically, or a combination thereof. Moreover, according to actual instrumentation and equipment of preferred embodiments of the method and system of the present invention, several selected steps could be implemented by hardware or by software on any operating system of any firmware or a combination thereof. For example, as hardware, selected steps of the invention could be implemented as a chip or a circuit. As software, selected steps of the invention could be implemented as a plurality of software instructions being executed by a computer using any suitable operating system. In any case, selected steps of the method and system of the invention could be described as being performed by a data processor, such as a computing platform for executing a plurality of instructions.

Unless otherwise defined, all technical and scientific terms used herein have the same meaning as commonly understood by one of ordinary skill in the art to which this invention belongs. The materials, methods, and examples provided herein are illustrative only and not intended to be limiting.

An algorithm as described herein may refer to any series of functions, steps, one or more methods or one or more processes, for example for performing data analysis.

Implementation of the apparatuses, devices, methods and systems of the present disclosure involve performing or completing certain selected tasks or steps manually, automatically, or a combination thereof. Specifically, several selected steps can be implemented by hardware or by software on an operating system, of a firmware, and/or a combination thereof. For example, as hardware, selected steps of at least some embodiments of the disclosure can be implemented as a chip or circuit (e.g., ASIC). As software, selected steps of at least some embodiments of the disclosure can be implemented as a number of software instructions being executed by a computer (e.g., a processor of the computer) using an operating system. In any case, selected steps of methods of at least some embodiments of the disclosure can be described as being performed by a processor, such as a computing platform for executing a plurality of instructions. The processor is configured to execute a predefined set of operations in response to receiving a corresponding instruction selected from a predefined native instruction set of codes.

Software (e.g., an application, computer instructions) which is configured to perform (or cause to be performed) certain functionality may also be referred to as a "module" for performing that functionality, and also may be referred to a "processor" for performing such functionality. Thus, a processor, according to some embodiments, may be a hardware component, or, according to some embodiments, a software component.

Further to this end, in some embodiments: a processor may also be referred to as a module; in some embodiments, a processor may comprise one or more modules; in some embodiments, a module may comprise computer instructions - which can be a set of instructions, an application, software - which are operable on a computational device (e.g., a processor) to cause the computational device to conduct and/or achieve one or more specific functionality. Some embodiments are described with regard to a "computer," a "computer network," and/or a "computer operational on a computer network." It is noted that any device featuring a processor (which may be referred to as "data processor"; "pre-processor" may also be referred to as "processor") and the ability to execute one or more instructions may be described as a computer, a computational device, and a processor (e.g., see above), including but not limited to a personal computer (PC), a server, a cellular telephone, an IP telephone, a smart phone, a PDA (personal digital assistant), a thin client, a mobile communication device, a smart watch, head mounted display or other wearable that is able to communicate externally, a virtual or cloud based processor, a pager, and/or a similar device. Two or more such devices in communication with each other may be a "computer network."

### BRIEF DESCRIPTION OF THE DRAWINGS

The invention is herein described, by way of example only, with reference to the accompanying drawings. With specific reference now to the drawings in detail, it is stressed that the particulars shown are by way of example and for purposes of illustrative discussion of the preferred embodiments of the present invention only, and are presented in order to provide what is believed to be the most useful and readily understood description of the principles and conceptual aspects of the invention. In this regard, no attempt is made to show structural details of the invention in more detail than is necessary for a fundamental understanding of the invention, the description taken with the drawings making apparent to those skilled in the art how the several forms of the invention may be embodied in practice. In the drawings:
Figures 1A and 1B show non-limiting, exemplary systems for venue management and booking according to at least some embodiments of the present invention;
Figure 2 relates to a system for supporting matching between live acts and venues. Items with the same reference numbers as previous figures have the same or similar function;
Figures 3A and 3B describe the operation of the systems of the previous figures with regard to the musician and the venue, respectively;
Figure 4 relates to a non-limiting, exemplary method for entering a musician's profile;
Figure 5 relates to an exemplary, non-limiting analysis engine according to at least some embodiments of the present invention, for example with operation with the previously described systems;
Figures 6A and 6B relate to non-limiting exemplary AI engines for supporting venue matching and optionally tour construction as previously described;
Figure 7 relates to a non-limiting exemplary flow for training the AI engine;
Figure 8 relates to a non-limiting exemplary flow for analyzing a history of a venue;
Figure 9 relates to a non-limiting exemplary flow for analyzing a history of performances for a live act, such as a band; and
Figure 10 relates to an exemplary method for matching a local act to a touring act for a particular tour date.

### DESCRIPTION OF AT LEAST SOME EMBODIMENTS

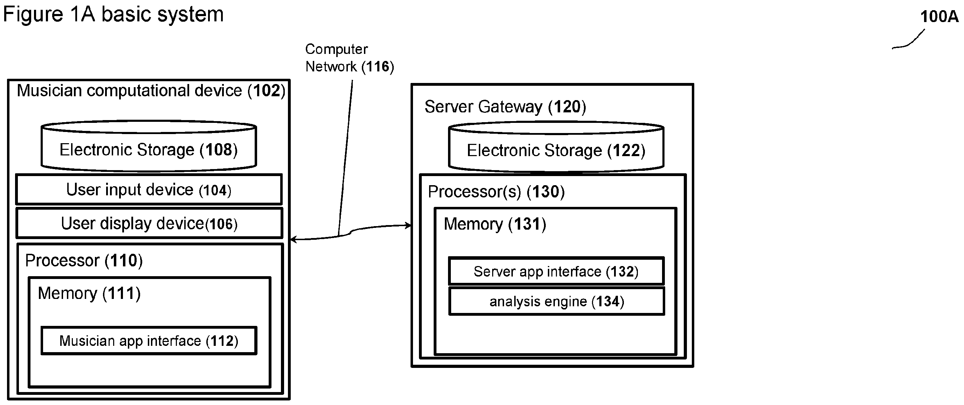

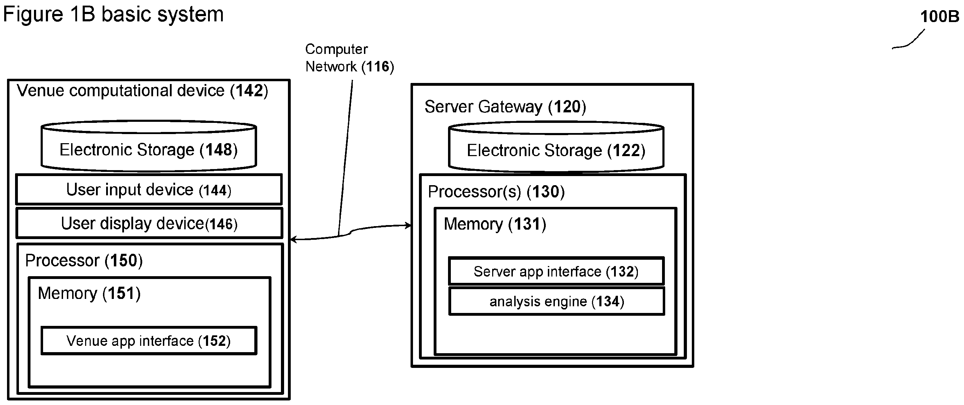

Figures 1A and 1B show non-limiting, exemplary systems for venue management and booking according to at least some embodiments of the present invention. Figure 1A relates to seeking a performance venue with regard to a musician user as a non-limiting example of a type of live performance. Figure 1B relates to managing a performance venue.

Turning now to Figure 1A, as shown a system 100A comprises a musician computational device 102 in communication with a server gateway 120 through a computer network 116. Server gateway 120 may optionally enable communication with one or more additional servers and/or other resources (not shown) to assist a musician user, through musician computational device 102, in locating a performance venue and also preferably constructing a tour, as described in greater detail below.

Musician computational device 102 comprises a user input device 104, an electronic storage 108 and user display device 106. User input device 104 may optionally be any type of suitable input device including but not limited to a keyboard, microphone, mouse, or other pointing device and the like. Preferably user input device 104 includes a list, a microphone and a keyboard, mouse, or keyboard mouse combination. User display device 104 is able to display information to the user for example from musician app interface 112.

Musician app interface 112 is preferably configured for receiving instructions from, and displaying information to, an operating user. For example, the user may perform such activities as requesting information about a venue, entering criteria for a venue and/or for a tour, entering information about the live performance to be delivered, and/or information about previous performances and so forth, through musician app interface 112. The user may also receive information about a prospective venue, including without limitation the type of venue, the size of the venue, available date(s) and time(s) to request to be booked, payment options, the extent of success of previous performers and so forth.

Musician computational device 102 also comprises a processor 110 and a memory 111. Functions of processor 110 preferably relate to those performed by any suitable computational processor, which generally refers to a device or combination of devices having circuitry used for implementing the communication and/or logic functions of a particular system. For example, a processor may include a digital signal processor device, a microprocessor device, and various analog-to-digital converters, digital-to-analog converters, and other support circuits and/or combinations of the foregoing. Control and signal processing functions of the system are allocated between these processing devices according to their respective capabilities. The processor may further include functionality to operate one or more software programs based on computer-executable program code thereof, which may be stored in a memory, such as a memory 111 in this non-limiting example. As the phrase is used herein, the processor may be "configured to" perform a certain function in a variety of ways, including, for example, by having one or more general-purpose circuits perform the function by executing particular computer-executable program code embodied in computer-readable medium, and/or by having one or more application-specific circuits perform the function.

Also optionally, memory 111 is configured for storing a defined native instruction set of codes. Processor 110 is configured to perform a defined set of basic operations in response to receiving a corresponding basic instruction selected from the defined native instruction set of codes stored in memory 111. For example and without limitation, memory 111 may store a first set of machine codes selected from the native instruction set for receiving information from the user through musician app interface 112 and a second set of machine codes selected from the native instruction set for transmitting such information to server gateway 120, for example in regard to information about the live performance to be provided as described above.

Similarly, server gateway 120 preferably comprises processor 130 and memory with machine readable instructions 131 with related or at least similar functions, including without limitation functions of server gateway 120 as described herein. For example and without limitation, memory 131 may store a first set of machine codes selected from the native instruction set for receiving such information about the live act from musician computational device 102, and a second set of machine codes selected from the native instruction set for executing functions of an analysis engine 134.

Analysis engine 134 preferably receives information about the live act and the live performance that is on offer to be booked through a server app interface 132. Analysis engine 134 may comprise an AI (artificial intelligence) engine as described in greater detail below. Analysis engine 134 also receives information from one or more venues, as described with regard to Figure 1B, and then proposes one or more matches between the live act, according to the information entered through musician app interface 112, and one or more venues. Such matches may include without limitation a suggested venue according to location, date and time, success of one or more previous acts, preferences of that venue for live acts, availability of the venue, payment arrangements, capacity of the venue and so forth.

Analysis engine 134 may also optionally construct a tour for the live act whose information was entered through musician app interface 112. Such a tour may include a suggested list of venues with suggested dates and times, and may be constructed according to such criteria as the preferences of the venues, availability of the venues, payment arrangements, preferences of the live act and also estimated travel time.

Instructions for operating analysis engine 134 are preferably stored in memory 131. Additional data may be stored in electronic storage 122.

Turning now to Figure 1B, a system 100B also comprises server gateway 120 as described with regard to Figure 1A. Items with the same reference numbers as Figure 1A have the same or similar function. Server gateway 120 is in communication with a venue computational device 142 through computer network 116. Such communication enables venue computational device 142 to enter information about desired live acts, including without limitation available dates and times, types of preferred acts, available financial compensation, information about the venue and so forth.

Venue computational device 142 comprises a user input device 144, an electronic storage 148 and user display device 146. User input device 144 may optionally be any type of suitable input device including but not limited to a keyboard, microphone, mouse, or other pointing device and the like. Preferably user input device 144 includes a list, a microphone and a keyboard, mouse, or keyboard mouse combination. User display device 144 is able to display information to the user for example from venue app interface 152.

Venue app interface 152 is preferably configured for receiving instructions from, and displaying information to, an operating user. For example, the user may perform such activities as requesting information about a particular act, entering criteria for an act, entering information about the venue itself, and/or information about previous performances held at the venue and so forth, optionally including such information as financial success, ticket sales and so forth, and information about capacity of the venue, through venue app interface 152. The capacity of the venue may be determined according to such criteria as the number of audience members, whether these members sit, stand or both, electrical or other capacity limitations for the type or act or actions that may be taken by the act, and so forth. The user may also receive information about a prospective act, including without limitation the type of act, any diversity information, available date(s) and time(s) available for booking, preferred date(s) and time(s) for booking, the extent of success of previous performances and so forth.

Venue computational device 142 also comprises a processor 150 and a memory 151. Functions of processor 150 preferably relate to those performed by any suitable computational processor, which generally refers to a device or combination of devices having circuitry used for implementing the communication and/or logic functions of a particular system. For example, a processor may include a digital signal processor device, a microprocessor device, and various analog-to-digital converters, digital-to-analog converters, and other support circuits and/or combinations of the foregoing. Control and signal processing functions of the system are allocated between these processing devices according to their respective capabilities. The processor may further include functionality to operate one or more software programs based on computer-executable program code thereof, which may be stored in a memory, such as a memory 151 in this non-limiting example. As the phrase is used herein, the processor may be "configured to" perform a certain function in a variety of ways, including, for example, by having one or more general-purpose circuits perform the function by executing particular computer-executable program code embodied in computer-readable medium, and/or by having one or more application-specific circuits perform the function.

Also optionally, memory 151 is configured for storing a defined native instruction set of codes. Processor 150 is configured to perform a defined set of basic operations in response to receiving a corresponding basic instruction selected from the defined native instruction set of codes stored in memory 151. For example and without limitation, memory 151 may store a first set of machine codes selected from the native instruction set for receiving information from the user through venue app interface 152 and a second set of machine codes selected from the native instruction set for transmitting such information to server gateway 120, for example in regard to information about the venue itself as described above.

Analysis engine 134 then receives such information about the venue from venue app interface 152 through server app interface 132 as previously described. Analysis engine 134 analyzes information about the venue and also information about one or more live act(s), to determine which live act(s) are to be suggested to the venue for one or more date(s) and time(s). The user may also request information about a venue from analysis engine 134, which then provides such information, optionally with additional analysis, such as similarities to or differences from previously booked acts at the venue.

Preferably, payment information, in terms of actual payments made to live acts, is provided to analysis engine 134. Optionally such information is provided through a connection to a third party payment processor, such as Stripe, Venmo or PayPal for example. Additionally or alternatively, payment may be made to such a third party payment processor as mediated through venue app interface 152 and server gateway 120, such that analysis engine 134 has access to the information. Such access facilitates further analyses for both venues and live acts, in terms of success of previous similar acts at a particular venue and so forth.

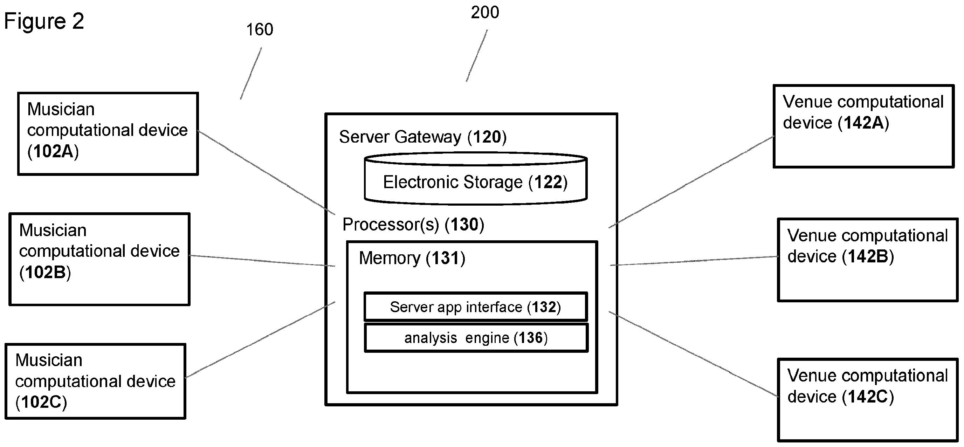

Figure 2 relates to a system for supporting matching between live acts and venues. Items with the same reference numbers as previous figures have the same or similar function. Figure 2 shows a non-limiting exemplary system 200, featuring both a plurality of musician computational devices 102, of which three are shown for the sake of illustration and without any intention of being limiting, and a plurality of venue computational devices 142, again of which three are shown for the sake of illustration and without any intention of being limiting. Musician computational devices 102A-102C and venue computational devices 142A-142C, enter information about live acts and venues, respectively, to server gateway 120.

Analysis engine 134 then preferably assists in matching venues with live acts, as part of a two-sided marketplace, as described in further detail below. Analysis engine 134 may for example receive a request for a hold for a musician by a venue, in which the musician (or other live act) is tentatively booked for a particular date and time. Optionally the venue may have a plurality of such holds, in which case analysis engine 134 may assist in creating an adjustable priority, by suggesting which live act may be given a higher priority according to criteria provided by the venue through venue computational device 142. Such criteria may include but are not limited to type of live act, one or more performance criteria, any diversity criteria, previous financial or other success by the live act, similarity to previously successful (or unsuccessful) acts at the venue, reviews of the live act (optionally from one or more trusted sources, optionally local source(s)) and so forth.

Analysis engine 134 may also help musicians and other live acts with planning according to different holds, for example by suggesting to the live act which venue may be preferable according to criteria set by the live act through musician computational device 102. Such criteria may include but are not limited to type of venue, previous financial or other success by similar acts at that venue, preferences with regard to tour dates and so forth.

Server gateway 120 may also assist in paying the musicians according to the contract, by receiving funds and/or being able to control disbursement of funds from the venue.

To assist in optimizing the two way marketplace, analysis engine 134 may for example suggest venues to musicians through musician computational devices 102 according to a plurality of criteria, including but not limited to previous results for musicians or other live acts in a similar genre; desired points or mapping of a route for a tour that is efficient (for example, to minimize driving time, and/or to select venues located within a radius of a particular location (according to driving time or distance)); provide a mappable search of venues according to distance and/or travel time; according to financial remuneration, whether from the venue or overall (for example, in regard to merchandise sales); venues that increase the likelihood of success (for example, in terms of audience numbers); and/or type of venue (such as for example a festival as opposed to a bar).

The term "genre" as described herein may relate to static categories from which a musician (and optionally also the venue) may select. Optionally, it refers to a set of parameters that enable a musician and/or a venue to be more precise in the type of music (or other live act) that is of interest to the venue and that is performed by the performer. Such parameters may include such information as examples of acts for which a "sound-alike" or "similar sounding" live act is requested, for a musician and/or band for example. For example, a plurality of acts with previously analyzed sound profiles may be provided and the venue may be asked to select one or more as examples of a desired sound and/or genre, in order to determine genre.

As another non-limiting example, the venue may be asked to select from a gradient or wheel of sounds and/or genres, which they can then blend by selecting along a gradient or continuum, and/or by selecting a plurality of sounds and/or genres. An AI analysis of previous successful acts at the venue and/or similar venues may also consider similar sounding bands and/or live acts of similar genres.

To assist in such matching, musicians may optionally enter already booked shows for a tour, plus further contacts (warm leads for finding other venues) and so forth, through musician computational devices 102.

Analysis engine 134 also preferably assists venues to select musicians and/or other live acts, as part of the two sided marketplace, through communication through venue computational device 142. Analysis engine 134 may suggest musicians and/or other live acts according to a variety of criteria, including previous ticket sales for that act at other venues, as a total and/or a proportion of available tickets sold; if a portion of the food or drink sales are paid as part of the remuneration, the amount of such sales for other similar acts; previous success at that venue/other similar venues for that type of act; the availability and schedule of the musician or other live act; genre or type of music or other live act; and filters (for example for diversity and/or other criteria).

Optionally remuneration for the live act may be determined according to one or more of a flat fee, at least a portion of ticket sales, and/or at least a portion of food and/or drink sales. The portion of ticket sales, and/or food and/or drink sales, may be determined according to a percentage after a facility or other fees have been deducted. Optionally the venue may create, and/or the live act may suggest, a plurality of tiers according to which the venue pays a higher percentage and/or a flat fee reward for hitting certain ticket and/or food and/or drink sales levels. For example, a musician may receive 50% of the ticket sales up to 100 tickets sold. From the 101^{st} ticket sold, the musician may receive 60% on all of the tickets sold instead of 50%.

Optionally, analysis engine 134 may suggest such a plurality of tiers, and/or other requested remuneration, based on criteria associated with the venue. Such criteria may be input through venue computational device 142, reported by other live act(s) through their respective live act computational device(s), scraped from information reported on the internet or another source, or a combination thereof. The suggestion may be made to musician computational device 102, venue computational device 142, or a combination thereof.

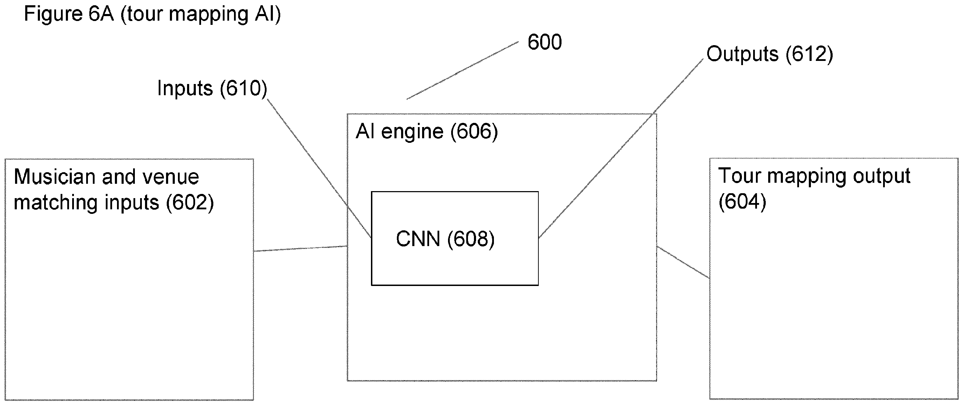

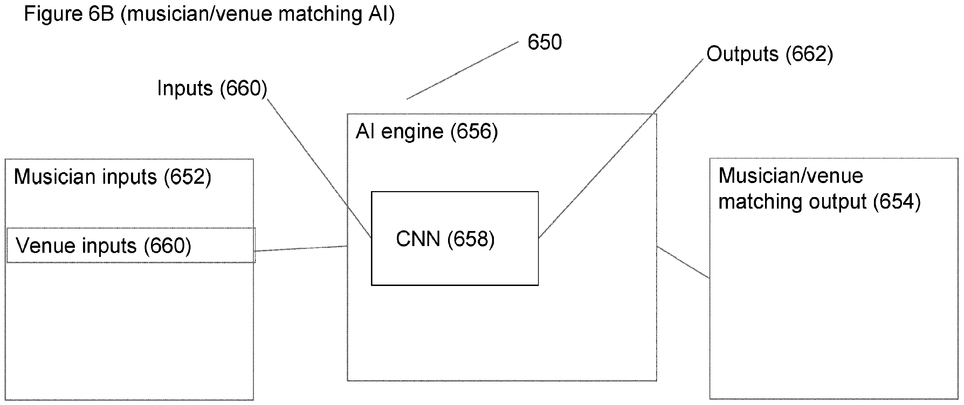

Analysis engine 134 may comprise an AI engine as described below with regard to Figure 6, to assist with obtaining such information and/or analyzing it to suggest pricing tiers, for example based on parameter(s) specific to one or more of the live act, the venue, the time of day, day of the week, time or season of the year, date and so forth. Optionally, wherein the AI engine generates a suggested payment policy request and transmits the request to musician computational device 102. The request may be included in a constructed tour if an acceptance input is input to musician computational device 102. Alternatively, acceptance may be input through venue computational device 142.

Analysis engine 134 may also suggest a band with a similar sound to an entered band (more specific than genre). Analysis engine 134 may create a playlist for a venue to consider different musicians. Analysis engine 134 may suggest a local well known band, for example as an opening act to draw a larger crowd for a touring musician. Such a suggestion may be made to the venue and/or to the musician, through their respective computational devices 142 and 102.

Analysis engine 134 may also indicate to performance of the venues themselves through venue computational device 142, for example according to diversity, financial performance and so forth, for example according to similar such venues.

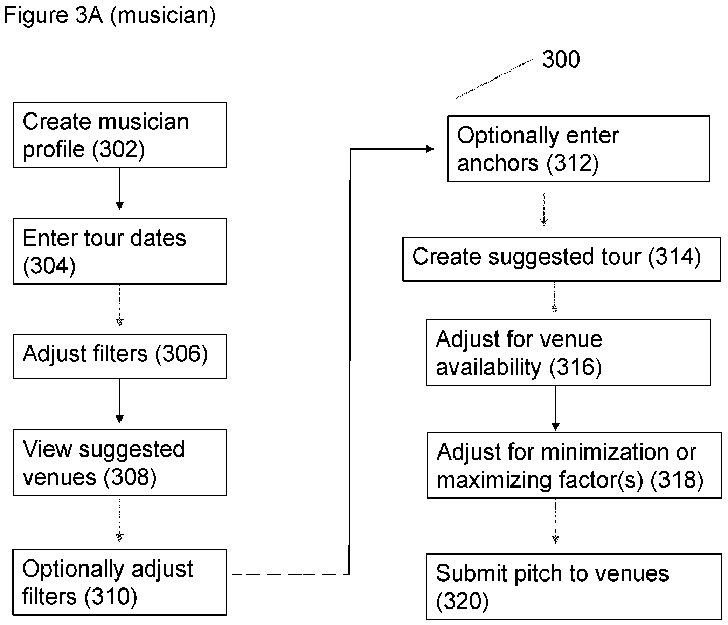

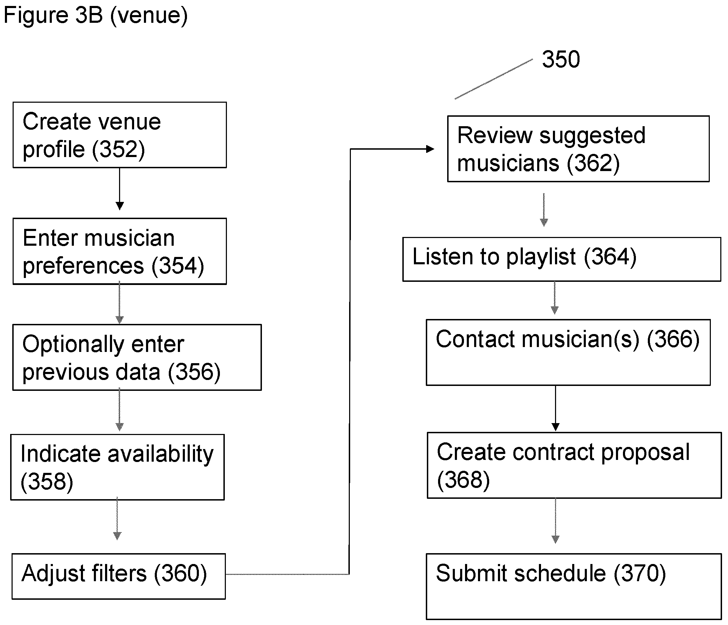

Figures 3A and 3B describe the operation of the systems of the previous figures with regard to the musician and the venue, respectively. Turning now to Figure 3A, as shown with regard to a method 300, the process begins when the musician (as a non-limiting example of a live performance act) creates a profile at 302. The profile may include such information as the type of act, the number of participants (for example, a solo performer vs a band), the genre, previous streaming or other online success, previous live performance information (for example with regard to financial indicators, types of genres and so forth) and the like. The musician may also upload one or more recordings for the previously described playlist.

At 304, the musician enters one or more preferred tour dates. These may be entered as single separate dates or as a range of time and dates. At 306, the musician may adjust one or more filters, for example according to preferred geographic location(s), preferred performance at a particular location on a particular date, travel time, preferred venue type and so forth. At 308, the system suggests one or more venues according to the entered information and also optionally according to the type of live act, for example according to similar live acts that had success at a particular venue.

The musician may then choose to adjust the filters at 310, for example to reduce or increase the number of suggestions. At 312, the musician may optionally enter one or more anchors for the tour. An anchor preferably comprises a combination of a date and a geographical location, which may for example relate to a previously engaged venue for the tour. An anchor may occur at the start or end of a tour, or during a tour. Preferably such anchor tour locations are included in said tour. Optionally one or more venue computational devices at each anchor tour location is notified of said live act by the server. Preferably the processor of the server executes instructions to determine navigation between the plurality of tour locations according to the anchor tour dates and the anchor tour locations.

At 314, according to the information provided by the musician, optionally including any anchor(s), and also information provided by the venues (as described herein and also with regard to Figure 3B), the system constructs a tour, including a plurality of dates and venues. At 316, the musician may request to adjust the tour according to venue availability, for example to avoid requesting a booking at a venue that already has multiple holds on that date.

At 318, the musician may request adjustments to the tour based on minimizing and/or maximizing factors, for example to minimize travel time or distance, radius of travel within a particular region and/or around a particular location, and/or to maximize audience members and/or financial remuneration.

At 320, the system may then assist the musician to submit a pitch to one or more venues, at one or more dates and times. Optionally the system may create the pitch, for example through execution of instructions through said previously described server, which may comprise an AI engine as described with regard to Figure 6. The musician may require that the venue pay a deposit before booking the show. Such a requirement may be made when the pitch is submitted, optionally for each venue separately, such that the musician may choose for which venue(s) the pitch is to be required. Alternatively, it may be made earlier in the process as part of setting the tour parameters. The deposit may be requested automatically through the system. Optionally, a venue may indicate in advance that it won't pay a deposit, in which case the tour may constructed to avoid such venues.

Also optionally, the musician may require deposits on their profile. The booking request then preferably autofills with a guarantee that matches the deposit. The deposit is preferably paid as soon as the booking is approved by the musician.

Figure 3B shows a method 350 for assisting venues to book live performance acts. The process begins at 352, when the venue creates a venue profile. The profile may include such information as the type of venue, audience capacity (including with regard to any local health and safety regulations, whether temporary or ongoing), types of preferred acts, and so forth .

At 354, the venue enters one or more preferences for live acts, such as musician preferences for example, including without limitation genre of music, number of performances, types of acts to be avoided, diversity preferences or requirements, previous success (in terms of ticket sales, overall payment to the venue (optionally including with regard to food and drink sales), or any other success factors as set by the venue), and so forth .

At 356, the venue may optionally enter previous data regarding previous acts, such as the type of acts, the name of the acts (although optionally this information is screened for privacy reasons), financial success and so forth. At 358, the venue indicates available dates and/or times for a live act, optionally including any existing holds. At 360, the venue may adjust one or more of the above filters to indicate preferences for live acts.

At 362, the system provides a list of musicians which the venue may then review. The information about the musicians may include for example the previously described information provided with regard to Figure 3A, optionally also with financial information and any local information (such as for example the presence of a local fan club). At 364, the venue may choose to listen to a provided playlist by the musician to assist in selection. At 366, the venue contacts the suggested musicians, optionally through the system as described herein, to suggest a booking at a particular date and time, or a plurality of such dates and times. At 368, the venue may send a contract proposal to the musician for further consideration. Once the contract has been agreed, at 370 the venue may indicate any changes to its current schedule and availability. The contract may be finalized later, in which case the system may send a reminder to both parties (venue and live act) so that the contract is finalized. At the time of signing the contract, or optionally later, such timing issues are preferably resolved as a schedule for set up, sound and light checks, and so forth. The system may determine a booking as "pending" until both sides agree to the contract and may continue to send reminders until the contract is finalized and signed, or alternatively if the pending booking is canceled.

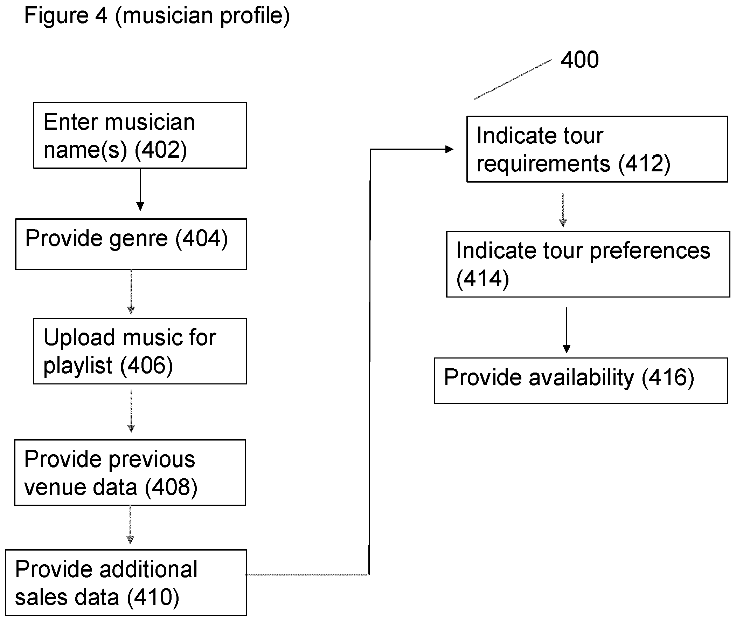

Figure 4 relates to a non-limiting, exemplary method for entering a musician's profile. As shown in a method 400, the process begins at 402 when the musician enters such information as the name of the act, the name of any participants, any biographical details and so forth. At 404, the musician indicates the genre of the music and optionally also any similar or inspirational acts. At 406, the musician may optionally upload one or more musical selections for a playlist of their music. The musician may optionally at 408 provide information about past performances, including without limitation date and venue, numbers of tickets sold, information about the audience, financial success, extent of food or drink sales at previous performances, and so forth. At 410, the musician may optionally provide other sales information, such as streaming music sales, merchandise sales, any local sales information and so forth. At 412, the musician may indicate any tour requirements, such as dates and times, set up time required, minimum financial remuneration requirements and so forth. At 414, the musician may indicate any tour preferences, such as preferred dates and times, type of venue, other acts playing at that venue at the same or similar time (for example for a festival), venue capacity and other preferences. Certain items may be indicated as required or desirable, according to the needs of the musician or other live act. For example, the live act may indicate various tour parameters as required or desirable, including but not limited to an availability of a local performer, locally available equipment or a combination thereof at each venue. The analysis engine, which may comprise an AI engine as described herein, would then adjust the tour according to such local availability. At 416, the musician indicates their availability with regard to dates and times, and optionally also geographic location.

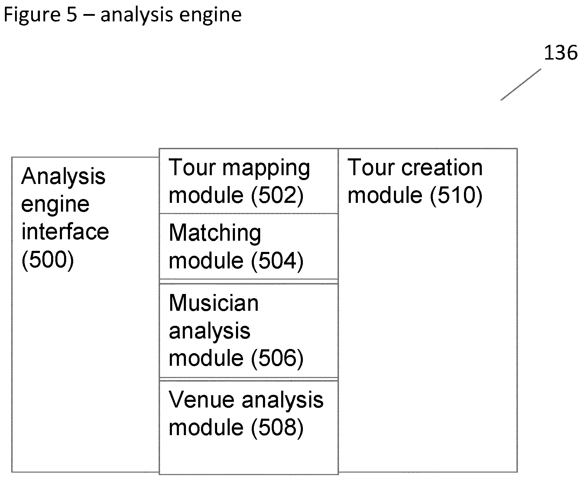

Figure 5 relates to an exemplary, non-limiting analysis engine according to at least some embodiments of the present invention, for example with operation with the previously described systems. Analysis engine 136 preferably comprises an analysis engine interface 500 for receiving information from, and sending analysis to, the previously described server gateway (not shown). Analysis engine 136 preferably comprises a tour mapping module 502, to assist a musician or other live act in creating a tour. Tour mapping module 502 may for example comprise an AI engine as described with regard to Figure 6A. Tour mapping module 502 preferably assists the musician in constructing a live tour according to a plurality of dates and times, and also geographic locations. The geographic locations may be constrained according to such criteria as travel time and/or distance from a particular location, and/or between locations. Tour mapping module 502 also preferably receives information from a matching module 504, to indicate which venues may be a suitable match to the musician. Tour mapping module 502 may then use the suggested matches to assist in constructing the tour.

Matching module 504 may in turn receive information from a matching AI engine as described with regard to Figure 6B. Matching module 504 preferably at least receives information from a musician analysis module 506 and a venue analysis module 508. Musician analysis module 506 may analyze the type or genre of music played by the musician, type of act (for example, solo performer vs a band), any diversity criteria requested by a venue, previous financial and/or audience success, current streaming or other online or radio success and so forth. Venue analysis module 508 may analyze the previous acts at a venue, for example with regard to the genre or type of music, any diversity criteria requested by the venue, type of act, previous financial and/or audience success, and so forth. Matching module 504 then suggests venues that may be suitable for a particular musician according to a combination of such criteria, and also musician and venue availability.

Figures 6A and 6B relate to non-limiting exemplary AI engines for supporting venue matching and optionally tour construction as previously described. Turning now to Figure 6A, as shown in a system 600, musician and venue matching inputs are preferably provided at 602. These inputs may then be preprocessed and provided as inputs 610 to an AI engine 606. In this non-limiting example, AI engine 606 comprises a CNN (convolutional neural network) 608. CNN 608 provides outputs 612 to a tour mapping output module 604 . The output preferably relates to live act (musician) preferences, venue preferences, tour preferences for the specific tour being constructed and so forth. Preferably AI engine 606 receives information about previous performances at a venue for different types of live acts, and also information about previous performances by a particular live act, as well as traffic, travel, distance and other information, which may be combined for determining outputs 612. Information about a previous performance preferably includes but is not limited to financial success (for example in terms of ticket sales, number of tickets sold, food and/or drink sales, other merchandise sales and so forth), details about a type of live act and a type of venue, and also details about the particular live act and venue. CNN 608 is then preferably trained on such data to enable outputs 612 to be determined.

A CNN is a type of neural network that features additional separate convolutional layers for feature extraction, in addition to the neural network layers for classification/identification. Overall, the layers are organized in 3 dimensions: width, height and depth. Further, the neurons in one layer do not connect to all the neurons in the next layer but only to a small region of it. Lastly, the final output will be reduced to a single vector of probability scores, organized along the depth dimension. It is often used for audio and image data analysis, but has recently been also used for natural language processing (NLP; see for example Yin et al, Comparative Study of CNN and RNN for Natural Language Processing, arXiv: 1702.01923v1 [cs.CL] 7 Feb 2017).

Figure 6B shows a non-limiting exemplary system 500 for combining musician inputs 652 and venue inputs 660, through analysis, to create musician/venue matching output 654. Preferably the analysis is performed by an AI engine 656, which again comprises a CNN, implemented as a CNN 658. Musician inputs 652 and venue inputs 660 are provided to AI engine 656 as inputs 660, for example after preprocessing. CNN 658 then combines these inputs for matching and then provides outputs 662 . Such a combination may be determined by training CNN 658 on information about past performances by musicians and at venues, preferably both in terms of details about specific musicians and venues, and also information about the type of musician and the type of venue.

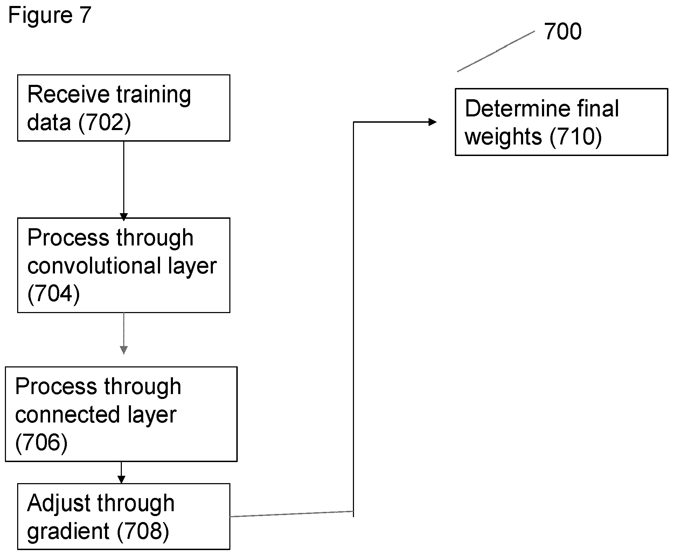

Figure 7 relates to a non-limiting exemplary flow for training the AI engine. As shown with regard to flow 700, the training data is received in 702 and is processed through the convolutional layer of the network in 704. A convolutional neural net is assumed for this non-limiting example, as described with regard to Figures 6A and 6B. After that the data is processed through the connected layer in 706 and adjusted according to a gradient in 708. Typically, a steep descent gradient is used in which the error is minimized by looking for a gradient. One advantage of this is it helps to avoid local minima where the AI engine may be trained to a certain point but may be in a minimum which is not the true minimum for that particular engine. The final weights are then determined in 710 after which the model is ready to use. The training data may be obtained as described herein from information about previous performances by live acts at a plurality of different venues, including financial success, number of tickets sold and so forth.

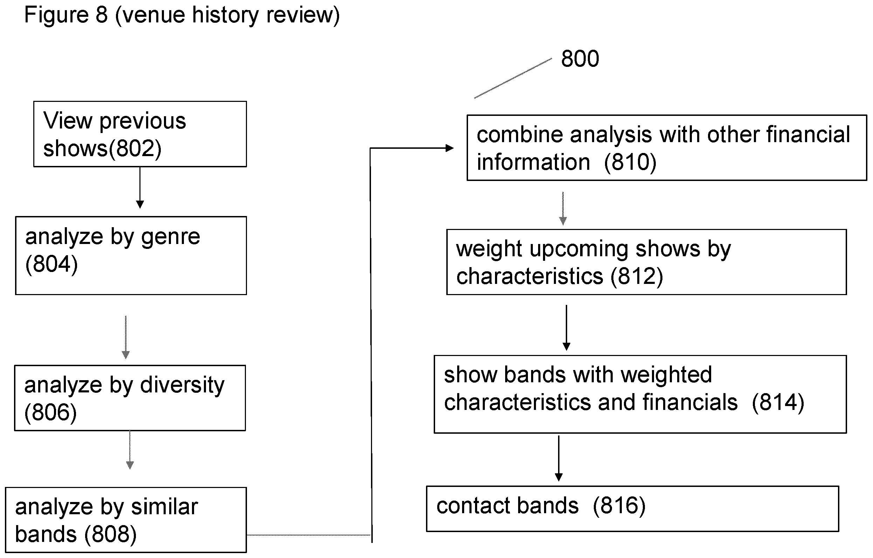

Figure 8 relates to a non-limiting exemplary flow for analyzing a history of a venue. Such analysis may be provided to a live act, such as a musician for example, either directly or as part of a matching process, to assist live acts in locating venues in which they will be successful. Such an analysis is also preferably provided to the venue, so that they can consider their own history in terms of successful and not successful live acts, expenses vs profits, and optionally also benchmarking against peer venues.

As shown in a method 800, the process begins when information is provided about previous shows at 802. Such information may include but is not limited to the live acts involved, the number of tickets sold, other sales information (for example regarding alcohol and/or food sales), expenses spent and total profit. The venue may also be invited to review these previous live shows, to add annotations for example.

At 804, the previous live acts are analyzed by genre, for example according to the previously described parameter analysis. The genre may be determined according to information provided by the venue, information provided by the live act, third party information, an analysis of the performance (such as for example an audio analysis for music) and the like.

At 806, the previous acts may be analyzed according to one or more diversity parameters, for example to enable venues to be certain that they are maintaining commitments or goals toward diversity.

At 808, the performance of other live acts that are determined to be similar are also analyzed, whether at the venue or another venue. Also optionally, the performance of the live acts that had performed at that venue are analyzed in terms of the relative success in comparison to other venues.

Optionally and preferably, at 810, such an analysis of the performance is combined with specific sales information, including but not limited to ticket sales (including with regard to sales before the date of the performance and at the door), profits from food and/or bar sales, expenses made and so forth. Such information may have been provided previously but may be separately analyzed for each live act. For example, a venue may have a preference for live acts that generate higher alcohol and/or food sales, rather than higher ticket sales.

At 812, upcoming shows may be weighted according to one or more characteristics, for example to guide the venue as to how much to spend on marketing, how much food and/or drink to expect to sell, the amount of staff that should be present and so forth. For dates on which more than one live act is present as a "hold" rather than a definite booking, the weighting process may be applied to all "hold" live acts to assist in choosing an act. The weighting process may also assist in deciding whether to add a live act on a particular date as a hold.

At 814, the various live acts (such as bands for example) are shown with regard to the weighted characteristics and optionally projected (and also optionally past) financial information. At 816, one or more live acts, such as bands, may be contacted to propose booking them on a particular date and/or range of dates.

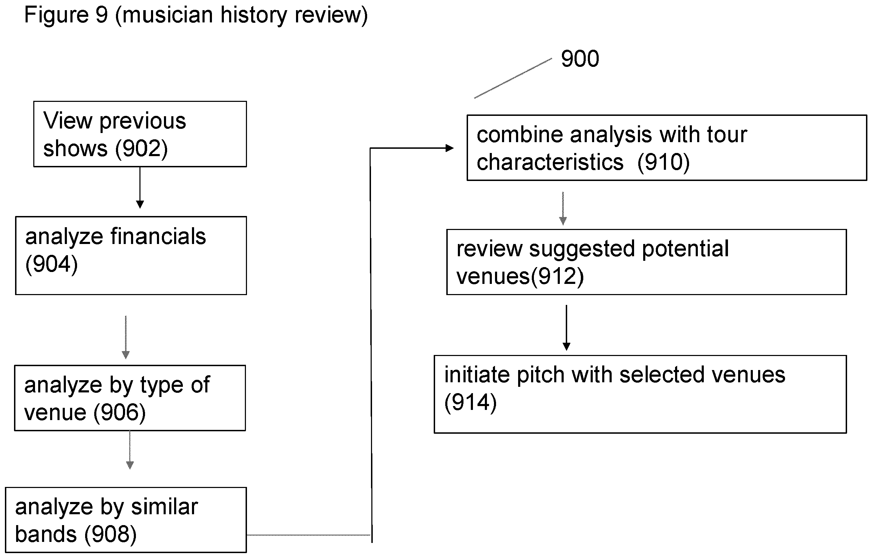

Figure 9 relates to a non-limiting exemplary flow for analyzing a history of performances for a live act, such as a band. Such analysis may be provided to a venue, either directly or as part of a matching process, to assist live acts and venues during matchmaking. Such an analysis is also preferably provided to the live act, so that they can consider their own history in terms of successful and not successful venue performances, expenses vs profits, and optionally also benchmarking against peer live acts.

As shown with regard to a method 900, the process starts at 902 by receiving historical information about previous live performances. Such information may include but is not limited to the venues involved, the number of tickets sold, merchandise sales, other sales information (for example regarding alcohol and/or food sales, if a cut (percentage of the sales) is provided as part of the remuneration for the live act), expenses spent (for example for traveling) and total profit. The live act may also be invited to review these previous live shows, to add annotations for example.

At 904, the financials for each performance are analyzed, for example to determine whether traveling to a particular venue was worthwhile and optionally also with regard to geographic area, if multiple performances occurred within a delineated area.

At 906, the performance information is analyzed by type of venue, for example to determine whether small theaters are more suitable than pubs or festivals. At 908, such information is optionally analyzed for similar live acts at the same venues and/or at different venues, for peer benchmarking.

The total analysis information is preferably combined with tour characteristics at 910, for example to account for any difficulties occurring during the tour, due to accommodation problems, higher than normal expenses, weather, travel time, and/or to indicate which aspects of a tour were felt to be more or less successful by the live act.

At 912, potential venues are suggested to the live act, which can then review them, according to the above benchmarking. At 914, once the live act has suggested one or more venues, a pitch may be sent to the selected venue(s).

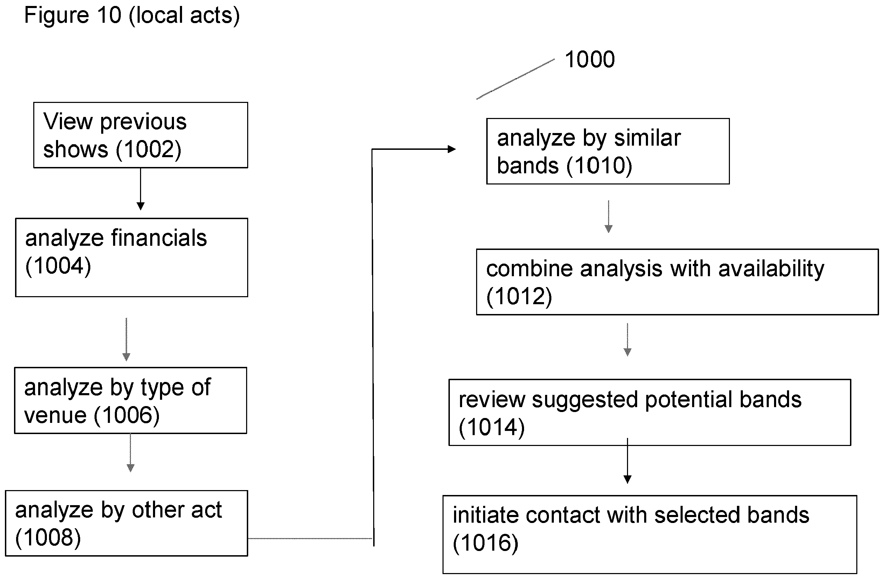

Figure 10 relates to an exemplary method for matching a local act to a touring act for a particular tour date. Local acts may match to local venues as for touring acts. Touring acts, and also the venues at which they are to play, often wish to have a local act as the opening act for a performance. The local act is known in the area and may therefore help in attracting a larger audience. However, local acts, such as local bands, may not know which touring bands are planning a tour to their area, or when the tour is planned. The method described with regard to Figure 10 also helps local acts plan their schedule according to touring acts.

As shown with regard to a method 1000, the process starts at 1002, when the local act inputs historical information about local performances, and optionally also performances (such as festivals) in which other acts performed, as described with regard to Figure 9. In 1004, an analysis is performed with regard to financials, also as described with regard to Figure 9. In 1006, an analysis is performed with regard to at least the type of venue, and preferably also specific local venues, in terms of financial and other information from the performance.

In 1008, the financial and other analyses are also preferably done with regard to the identity of touring acts, and/or type of touring acts, with which the local act performed as the opening act. Optionally these analyses are considered with regard to other bands or acts that may perform as opening acts, at the same or at least similar venues, for benchmarking in 1010.

At 1012, the analysis of touring bands (or other live acts) may be combined with the availability of such bands for particular dates at local venues for the local act, to assist the local act in determining which touring acts may be suitable to contact, to propose a joint performance. At 1014, the local act reviews the suggested touring acts, preferably also with regard to date and suggested venue. At 1016, one or more touring acts may be contacted, to propose a joint performance, optionally with details from the analysis.

It is appreciated that certain features of the invention, which are, for clarity, described in the context of separate embodiments, may also be provided in combination in a single embodiment. Conversely, various features of the invention, which are, for brevity, described in the context of a single embodiment, may also be provided separately or in any suitable subcombination.

Although the invention has been described in conjunction with specific embodiments thereof, it is evident that many alternatives, modifications and variations will be apparent to those skilled in the art. Accordingly, it is intended to embrace all such alternatives, modifications and variations that fall within the spirit and broad scope of the appended claims. All publications, patents and patent applications mentioned in this specification are herein incorporated in their entirety by reference into the specification, to the same extent as if each individual publication, patent or patent application was specifically and individually indicated to be incorporated herein by reference. In addition, citation or identification of any reference in this application shall not be construed as an admission that such reference is available as prior art to the present invention.

## Claims

1. A system for navigating a live act through a plurality of venues at a plurality of dates to create a tour, the system comprising a live act computational device, comprising a memory for storing a plurality of instructions and a processor for executing said instructions; a server, said server comprising a memory for storing a plurality of instructions and a processor for executing said instructions; and a computer network for communicating between said live act computational device and said server; wherein said live act computational device receives an input plurality of tour parameters, comprising a date range for the tour, a plurality of venue locations and travel requirements, and sends said tour parameters to said server; and wherein said server determines said tour at least according to said tour parameters to create a map to navigate the live act through the plurality of venues at the plurality of dates.

2. The system of claim 1, wherein said processor of said server further executes instructions to create a tour pitch according to said tour parameters, and wherein said server further sends said tour pitch to said venue computational device.

3. The system of claim 2, wherein said tour pitch is adjusted through said live act computational device.

4. The system of any of the above claims, wherein said tour parameters further comprise at least one venue parameter, selected from the group consisting of a geographical region, a geographical location, a type of venue, a specific venue, a payment policy and a successful venue.

5. The system of claim 4, wherein said successful venue is determined to be successful according to at least one success criteria, wherein said success criteria comprises one or more of financially successful for ticket sales, financially successful for merchandise sales, financially successful for a cut of food and/or beverage sales, financially successful for payment to a live act, or a combination thereof; optionally wherein said success criteria is further determined according to success for a previous live act of the same or similar type as the live act.

6. The system of any of the above claims, wherein said date range comprises a desired start date and a desired end date; wherein said date range further comprises one or more specific dates at specific geographical locations; optionally wherein said one or more specific dates at specific geographical locations is determined according to a specific city; and/or optionally wherein said one or more specific dates at specific geographical locations is determined according to a specific venue.

7. The system of any of the above claims, wherein said travel requirements relate to a desired distance for travel, a desired time for travel, a desired travel mode or a combination thereof.

8. The system of any of the above claims, wherein said tour parameters further comprise determining an availability of a local performer, locally available equipment or a combination thereof at each venue; and adjusting said tour according to said local availability.

9. The system of any of the above claims, further comprising a venue computational device for each venue; wherein said tour parameters further comprise providing one or more anchor tour locations, wherein each of said anchor tour locations comprises a specific geographic location; wherein said anchor tour locations are included in said tour; and wherein one or more venue computational devices at each anchor tour location is notified of said live act by said server.

10. The system of claim 9, wherein said tour parameters further comprise providing one or more anchor tour dates for said one or more anchor tour locations; wherein said processor executes said instructions to determine said navigation according to said anchor tour dates and said anchor tour locations.

11. The system of any of the above claims, further comprising a venue computational device for each venue; wherein said server notifies each venue computational device according to said navigation and said tour; wherein each venue computational device responds to said notification with acceptance or rejection of said live act, optionally according to an auction for bidding on said live act by said venue through said venue computational device.

12. The system of any of the above claims, wherein said processor at said server executes a plurality of instructions to operate an AI engine, wherein said AI engine generates said tour according to said tour parameters.

13. The system of any of the above claims, wherein said processor at said server executes a plurality of instructions to operate an AI engine, wherein said AI engine generates a suggested payment policy request and transmits said request to said live act computational device; wherein said request is included in said tour if an acceptance input is input to said live act computational device.

14. The system of claims 12 or 13, wherein said AI engine comprises a CNN (convolutional neural network) model, trained according to data regarding previous performances at said live venues, distances between venues, and time required for traveling.
